# EUROPEAN PATENT APPLICATION

(11) **EP 4 760 931 A1**
(43) Date of publication of application: **17.06.2026**
(21) Application number: 25795008.9
(22) Date of filing: 18.04.2025
(51) Int. Cl.: H01M 50/264, H01M 50/289, H01M 50/213

(54) **BATTERY CELL ASSEMBLY**

(30) Priority: 22.04.2024 KR 20240053114
(71) Applicant: LG Energy Solution, Ltd., Seoul 07335 (KR)
(72) Inventor: AN, Ji Myong, Daejeon 34122 (KR)
(74) Representative: Plasseraud IP
(86) International application number: PCT/KR2025/005278
(87) International publication number: WO 2025/225970

(57) **Abstract**

[Summary]

A battery cell assembly according to one example of the present invention may comprise a plurality of battery cells, a frame on which the plurality of battery cells is mounted, an upper cover coupled with the upper surface of the frame to cover the upper portions of the plurality of battery cells, a first soft portion interposed between the frame and the upper cover and having a plurality of first soft holes through which the upper portions of the plurality of battery cells are each fitted and passed, and a lower cover coupled with the lower surface of the frame in a state where the lower portions of the plurality of battery cells are partially inserted.

## Description

### [Technical Field]

The present invention relates to a battery cell assembly, and more particularly, relates to a battery cell assembly capable of individually separating a plurality of battery cells later by fixing the battery cells to a frame in a compression manner.

This application claims the benefit of priority based on Korean Patent Application No. 10-2024-0053114 dated April 22, 2024, the disclosure of which is incorporated herein by reference in its entirety.

### [Background Art]

Recently, rechargeable batteries have been widely used as an energy source for wireless mobile devices. Batteries are used as an energy source for lightweight transportation means such as electric scooters, electric bicycles, and electric kickboards, including electric vehicles.

Transportation means utilizing batteries have been proposed to solve air pollution caused by internal combustion transportation means using fossil fuels. However, the process of manufacturing batteries emits more carbon dioxide than carbon emissions of internal combustion transportation means.

European battery regulations require environmental friendliness and stability verification throughout the entire life cycle from battery production to recycling for carbon neutrality. In addition, devices and lightweight transportation means containing batteries must be arranged to enable battery separation and replacement.

Particularly, batteries for LMT (light means of transport) may be required to have features in which the batteries are easily removable and replaceable during the product life cycle. Here, the LMT battery may be defined as a battery for providing electric power for traction force of a wheeled vehicle with a total weight of 25 kg or less, where batteries for electric vehicles are not included.

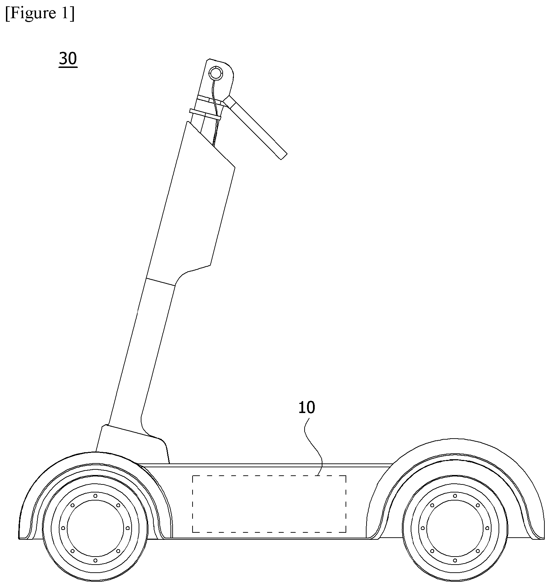

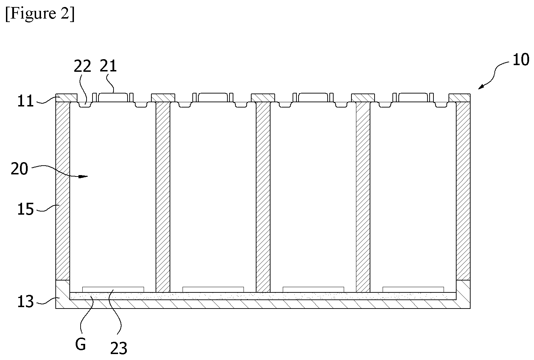

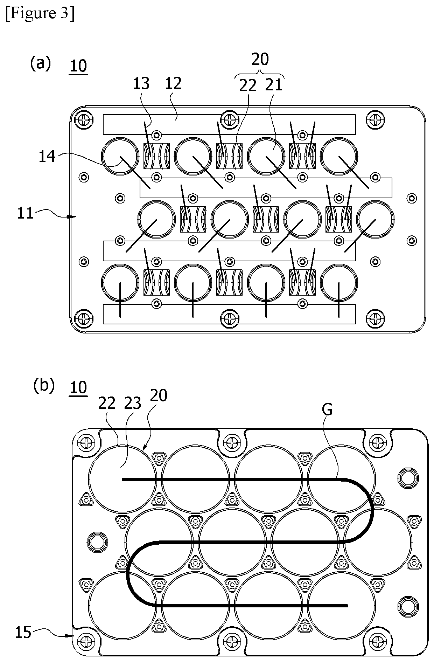

Figure 1 is an example of a battery cell assembly applied to a lightweight transportation means, Figure 2 schematically illustrates a cross-sectional diagram of a conventional battery cell assembly, Figure 3(a) is a plan view of a battery cell assembly in which terminals of battery cells are electrically connected by a wire bonding method, and Figure 3(b) schematically illustrates a state where a glue is applied to a plurality of battery cells.

The battery cell assembly (10) comprises a plurality of battery cells (20), an upper cover (11), a lower cover (13), and a frame (15). The frame (15) is for protecting the plurality of battery cells (20). The plurality of battery cells (20) is fixed by the upper cover (11) and the lower cover (13) in a state of being inserted into the frame (15).

Referring to Figures 2 and 3(a), the upper cover (11) is coupled to the frame (15) so that the first terminal (21) and the second terminal connection portion (22) of the battery cell (20) are exposed to the outside. An electrode terminal block (12) is arranged on the upper cover (11).

The first terminal (21) may be a positive terminal. The second terminal connection portion (22) is a portion electrically connected to the second terminal (23). The second terminal (23) may be a negative terminal.

The battery cell assembly (10) is obtained by connecting a plurality of battery cells (20) in series or in parallel according to the battery capacity of the lightweight transportation means (30). The electrical connection of the plurality of battery cells (20) can be performed by a wire bonding device (not shown).

The wire bonding device (not shown) can wire bond the first terminal (21) and the second terminal connection portion (22) of each battery cell (20) to the electrode terminal block (12) according to preset coordinates.

The wire bonding device (not shown) can wire bond the first terminal (21) of the battery cell and the electrode terminal block (12) and wire bond the second terminal connection portion (22) of the battery cell and the electrode terminal block (12), using a very thin metal wire.

The above wires (13, 14) correspond to electric wires connecting the first terminal (21) and the second terminal connection portion (22) of the battery cell (20) to the electrode terminal block (12). When a surge occurs in the battery cell assembly (10), the wires (13, 14) can act as a fuse blocking the electrical connection between the battery cell (20) and the electrode terminal block (12) while being cut off.

The wire bonding method has an advantage capable of solving the surge problem, which is the biggest risk factor for batteries. However, to electrically connect the terminals (21, 22) of multiple battery cells (20) using the wire bonding method, multiple battery cells (20) must be mounted on the frame (15) at normal positions.

To this end, conventionally, multiple battery cells (20) were fixed to the lower cover (13) using a glue (G). Referring to Figure 3(b), the glue (G) is applied to the entire lower surface of the plurality of battery cells (20) arranged with the second terminals (23).

The lower cover (13) is coupled to the frame (15) to cover the lower surface of the plurality of battery cells (20) arranged with the second terminals (23). The lower cover (13) is bonded and fixed to the lower surface of the plurality of battery cells (20) by the glue (G).

In the conventional battery cell assembly (10), the respective terminals (21, 22) of the battery cells (20) were connected to the electrode terminal block (12) arranged on the upper cover (11) by the wire bonding method in a state where the plurality of battery cells (20) was bonded and fixed to the lower cover (13).

When problems such as over-discharge, damage, or short-circuit occurred in some battery cells (20) among the plurality of battery cells (20) during the use of the lightweight transportation means (30), it was difficult to individually separate the battery cells (20) due to the structure of the conventional battery cell assembly (10).

Accordingly, in the conventional battery cell assembly (10), when problems occurred in some battery cells (20) among the plurality of battery cells (20), the battery cell assembly (10) itself had to be replaced for the stability of the lightweight transportation means.

In the method of replacing the battery cell assembly (10) itself in the lightweight transportation means (30), the normal battery cells had to be discarded together with the defective battery cells. It was difficult to recycle the discarded battery cells, whereby there was a problem causing environmental pollution.

In addition, the conventional battery cell assembly (10) has a structure in which individual separation of the battery cells (20) is impossible, which does not comply with the European battery regulations, so that it is necessary to develop a battery cell assembly (20) in which the battery cells (20) can be individually separated.

### [Disclosure]

### [Technical Problem]

The present invention has been devised to solve such problems, which is intended to provide a battery cell assembly capable of individually separating a plurality of battery cells later by fixing the battery cells to a frame in a compression manner.

Through one example of the present invention, it is intended to provide a battery assembly for LMT (light means transport) that can satisfy conditions required for a battery assembly for a small electric transportation means (LMT).

### [Technical Solution]

To achieve the above-described objects, a battery cell assembly according to one example of the present invention may be arranged as follows.

The battery cell assembly may comprise a plurality of battery cells, a frame on which the plurality of battery cells is mounted, an upper cover coupled to the upper surface of the frame to cover the upper portions of the plurality of battery cells, and a lower cover coupled to the lower surface of the frame in a state where the lower portions of the plurality of battery cells are partially inserted.

In addition, the battery cell assembly may comprise a plurality of battery cells, a frame on which the plurality of battery cells is mounted, an upper cover coupled with the upper surface of the frame to cover the upper portions of the plurality of battery cells, a first soft portion interposed between the frame and the upper cover and having a plurality of first soft holes through which the upper portions of the plurality of battery cells are each fitted and passed, and a lower cover coupled with the lower surface of the frame in a state where the lower portions of the plurality of battery cells are partially inserted.

In the battery cell assembly, terminal connection of the plurality of battery cells may be performed through the upper portions of the battery cells. That is, the electrical terminal connection of the positive and negative electrodes may all be performed through the upper portions of the battery cells. Therefore, the terminal connection through the lower portions of the battery cells may be excluded.

To separate each battery cell from the battery assembly, the frame and the lower cover may be released. When the lower cover is removed, a portion of the lower portion of the battery cell is positioned to protrude from the frame. Therefore, the battery cell may be easily separated from the frame by pulling the protruding portion of the battery cell to be removed.

In addition, the battery cell assembly may have a first soft portion interposed between the frame and the upper cover.

The first soft portion may have a plurality of first soft holes through which the upper portions of the plurality of battery cells are each fitted and passed.

The first soft portion may be integrally compressed and fixed between the upper cover and the frame to limit vertical movement and radial movement of each of the plurality of battery cells.

The first soft portion may be arranged such that the periphery of the first soft hole is contactable with the upper surface of the frame.

The first soft portion may have one or more first fixing holes arranged to pass through one or more first fixing protrusions, respectively, protruding from the upper surface of the frame around cell spaces of the frame.

The upper cover may have one or more first cover protrusions which are each fitted and coupled to one or more first grooves arranged on the upper surface of the frame, and may be compressed and fixed to the upper surface of the frame through the first soft portion.

Also, in the battery cell assembly, a second soft portion may be interposed between the frame and the lower cover.

The second soft portion may have a plurality of soft grooves into which the lower portions of the plurality of battery cells are each inserted.

In the second soft portion, the plurality of soft grooves may be integrally formed.

The second soft portion may connect the lower portions of the plurality of battery cells as one through the plurality of soft grooves.

The second soft portion may have a second soft hole passing through the bottom surface of the second soft groove.

The second soft portion may have a soft rib arranged to surround the battery cell by extending from the bottom surface of the second soft groove to a predetermined length.

The second soft portion may be arranged to cover the lower portions of the plurality of battery cells exposed to the lower portion of the frame.

The frame may be arranged with step portions recessed along the circumferential direction on the lower surface of the frame so that there is a free space between the inner surface of the frame and the second soft portion in a state where the second soft portion is inserted into the lower portions of the plurality of battery cells.

The lower cover may be coupled to the frame in a state where the second soft portion is inserted into the lower portions of the plurality of battery cells to limit vertical movement of each of the plurality of battery cells.

The lower cover may have a lower cover groove recessed from a lower cover coupling surface in contact with the lower surface of the frame, and may be coupled to the lower surface of the frame so that the lower cover groove contacts the second soft portion, thereby being compressed and fixed to the plurality of battery cells through the second soft portion.

The frame may comprise a first body and a second body in which a plurality of cell spaces into which the battery cells are insertable are opened in both directions along the longitudinal direction of the battery cells, and the first body and the second body may be arranged so that they enable to be fitted and coupled.

A third soft portion may be interposed between the first body and the second body.

The third soft portion may have a plurality of third soft holes through which each of the plurality of battery cells is fitted and passed.

The third soft portion may limit movement of each of the plurality of battery cells in the radial direction, as the periphery of the third soft hole is compressed to the first body and the second body and the third soft hole is compressed to the outer surface of the battery cell in the cell space of the frame.

The third soft portion may have one or more third fixing holes arranged to pass through one or more second fixing protrusions, respectively, protruding from the upper surface of the second body, and may be seated on the upper surface of the second body so that the third soft holes are individually exposed to the cell space of the frame through the third fixing holes.

One or more third grooves are arranged on the lower surface of the second body, and the second body may be fitted and coupled to the second cover protrusion of the lower cover through the third groove.

One or more third grooves are arranged on the lower surface of the second body, and the second body may be fitted and coupled to the second cover protrusion of the lower cover through the third groove.

To achieve the above-described objects, according to one example of the present invention, it is possible to provide a battery assembly for LMT. The battery cell used in the battery assembly may be a cylindrical battery cell, and may also be a rectangular battery cell.

The plurality of battery cells may be inserted into the frame and sealed, and the gap between the plurality of battery cells may be maintained through the soft portion. The soft portion may be provided at the upper portions and/or the lower portions of the plurality of battery cells. The upper portion and/or lower portion of each battery cell may be fitted and coupled into the soft portion to a certain extent. Therefore, the longitudinal movement as well as the radial movement of the battery cell may be limited through the fixed soft portion.

Specifically, the battery cell assembly may comprise a plurality of battery cells having beading grooves recessed from the outer surface along the radial direction, a frame having a plurality of cell spaces into which the battery cells are insertable, wherein the plurality of battery cells are mounted thereon so that the beading grooves are exposed upward, a first soft portion having a plurality of first soft holes to pass through the plurality of battery cells, respectively, and arranged to fix the upper portions of the plurality of battery cells to the upper surface of the frame by being seated on an upper surface of the frame in a state of being fitted and coupled into the beading grooves of the plurality of battery cells, and an upper cover covering the upper portions of the plurality of battery cells, coupled to the upper surface of the frame so as to be in contact with the first soft portion, and compressed and fixed to the upper surface of the frame through the first soft portion.

Also, the battery cell assembly may comprise a second soft portion having a plurality of soft grooves into which each battery cell is inserted, and connecting the lower portions of the plurality of battery cells as one by being inserted and fixed to the lower portions of the plurality of battery cells through the plurality of soft grooves.

In addition, the battery cell assembly may comprise a lower cover arranged with a lower cover coupling surface in contact with the lower surface of the frame and a lower cover groove recessed from the lower cover coupling surface. The lower cover may be coupled to the lower surface of the frame so that the lower cover groove covers the second soft portion, and may be compressed and fixed to the lower portions of the plurality of battery cells through the second soft portion.

The upper portions of the plurality of battery cells may be integrally fixed to the upper surface of the frame through the first soft portion, and the lower portions of the plurality of battery cells may be integrally compressed and fixed to the lower cover through the second soft portion.

The first soft portion may be arranged with a plurality of first soft holes according to the arrangement pattern of the battery cells, and arranged so that the peripheries of the first soft holes are contactable with the upper surface of the frame.

Also, the first soft portion may have a plurality of first fixing holes passing through a plurality of first fixing projections, respectively, protruding from the upper surface of the frame, and may be seated on the upper surface of the frame at a normal position through the plurality of first fixing holes.

In addition, the second soft portion may have a bottom surface of a second soft groove arranged to be surface-contactable with the bottom surface of the lower cover groove, and may be closely attached and fixed to the lower portions of the plurality of battery cells through the lower cover.

Furthermore, the second soft portion may be integrally arranged with a soft rib extending from the bottom surface of the second soft groove to a predetermined length to surround the outer surface of each battery cell.

Also, the second soft portion may have a plurality of soft grooves arranged so that the lower portion of the battery cell is insertable to a predetermined length, and may be arranged to be insertable into the lower cover groove.

In addition, the second soft portion may be integrally arranged with the plurality of soft grooves according to the arrangement pattern of the battery cells.

The frame may comprise a first body and a second body in which a plurality of cell spaces is opened in both directions along the length direction of the battery cell, and the first body and the second body may be arranged so that they enable to be fitted and coupled.

In addition, the battery cell assembly may comprise a third soft portion having a plurality of third soft holes to pass through the plurality of battery cells, respectively, disposed between the first body and the second body so that each third soft hole is exposed to each cell space, and being disposed between the first body and the second body, and compressed and fixed to the outer surface of the plurality of battery cells through each third soft holes.

The third soft portion may have a plurality of third fixing holes passing through each second fixing protrusion of the second body, and may be seated on the second body coupling surface of the second body at a normal position through the plurality of third fixing holes.

In addition, the third soft portion may be arranged with the plurality of third soft holes according to the arrangement pattern of the battery cells, and the peripheries of the third soft holes may be arranged to be contactable with the first body and the second body.

The second body may be arranged with a step portion recessed from the inner surface of the second body along the circumferential direction of the second body and stepped from the lower surface of the second body, and the second soft portion may be inserted and fixed into the lower portions of the plurality of battery cells exposed to the lower portion of the second body to have a free space with the step portion.

The first soft portion may be fixed between the upper cover and the frame through both coupling, and the upper portions of the plurality of battery cells may be fixed integrally through the fixed first soft portion.

The second soft portion may be fixed between the lower cover and the frame through both coupling, and the lower portions of the plurality of battery cells may be fixed integrally through the fixed second soft portion.

The battery cell assembly may be disassembled in the reverse order from the manufacturing or assembly order of the battery cell assembly. Particularly, if the coupling of the lower cover and the frame is released and thus the lower cover is removed, the second soft portion and the lower portions of the battery cells coupled thereto may be exposed to the outside. The lower portions of the battery cells have a certain gap through the second soft portion. If only the second soft portion is removed, the lower portions of the battery cells may be exposed to the outside in a state of having a certain gap.

Therefore, by holding the lower portion of the issued battery cell, it may be separated from the frame. At this time, since there is in a state where the first soft portion and/or the third soft portion are fixed to the frame, the issued battery cell may be easily separated from the first soft portion and/or the third soft portion without being affected by other battery cells.

Therefore, it is very easy to individually separate each of the plurality of battery cells from the battery cell assembly, which means that each of the plurality of battery cells may be easily replaced.

### [Effects of Invention]

The battery cell assembly having such constitution and structure has the following effects.

The battery cell assembly can fix the plurality of battery cells to the frame in a compression manner. When some of the plurality of battery cells have a problem, the battery cell assembly can individually separate the problematic battery cells.

In the battery cell assembly, an upper cover, a first soft portion, a frame, and a lower cover can be fitted and coupled at normal positions, and a plurality of battery cells can be compressed and fixed to the frame through the first soft portion, the second soft portion, and the third soft portion.

The first soft portion is fitted and coupled to the beading grooves of the plurality of battery cells, thereby fixing each battery cell to the frame in the longitudinal and lateral directions of the battery cell, whereby it is possible to prevent surrounding battery cells from being separated together when any one of the plurality of battery cells is separated from the frame.

The battery cell assembly has a structure in which the respective components are detachably assembled, wherein the disassembly of the battery cell assembly is simple, so that it is easy to replace the issued battery cell.

In addition, the battery cell assembly can replace the issued battery cell with a new battery cell, so that it is possible to extend the service life.

### [Brief Description of Drawings]

Figure 1 is an example of a battery cell assembly applied to a lightweight transportation means.
Figure 2 schematically illustrates a cross-sectional diagram of a conventional battery cell assembly.
Figure 3(a) is a plan view of a battery cell assembly in which terminals of battery cells are electrically connected by a wire bonding method, and Figure 3(b) schematically illustrates a state where a glue is applied to a plurality of battery cells.
Figure 4 is a perspective diagram of a battery cell assembly according to one example of the present invention.
Figure 5 is an exploded perspective diagram of a battery cell assembly according to one example of the present invention.
Figure 6 is a cross-sectional diagram of A-A of Figure 4, and Figure 7 is a partially enlarged diagram of Figure 6, which is a diagram for explaining a force that a first soft portion to a third soft portion pressurize a plurality of battery cells in longitudinal and radial directions.
Figures 8 to 10 are diagrams for explaining a process of separating an issued battery cell from a battery cell assembly according to one example of the present invention and replacing it with a new battery cell.

### [Mode for Invention]

Hereinafter, with reference to the attached drawings, a battery cell assembly according to a preferred example of the present invention will be described.

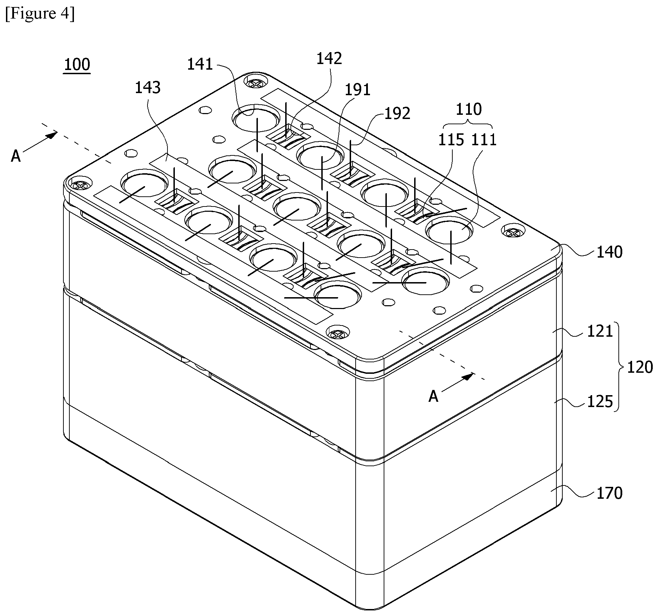

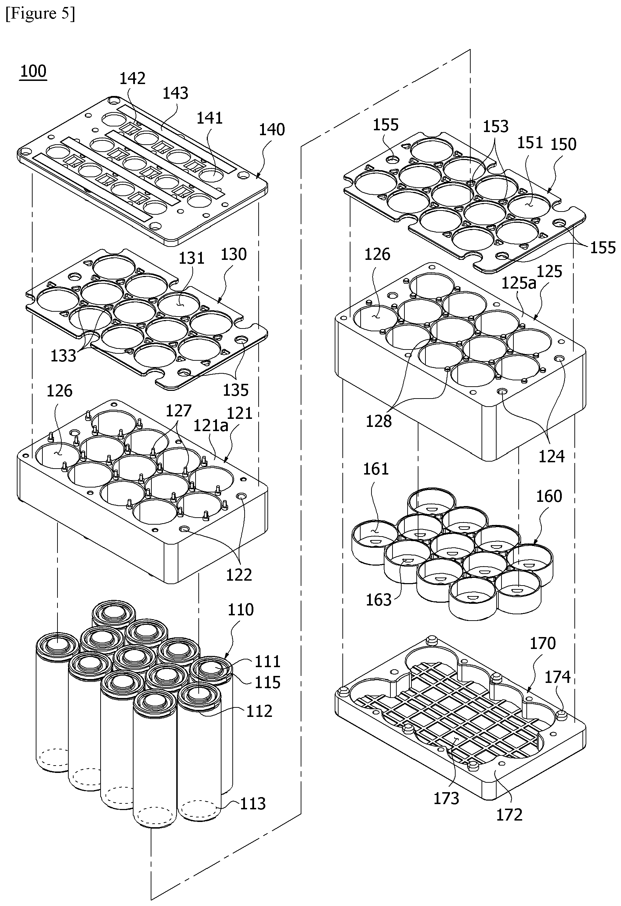

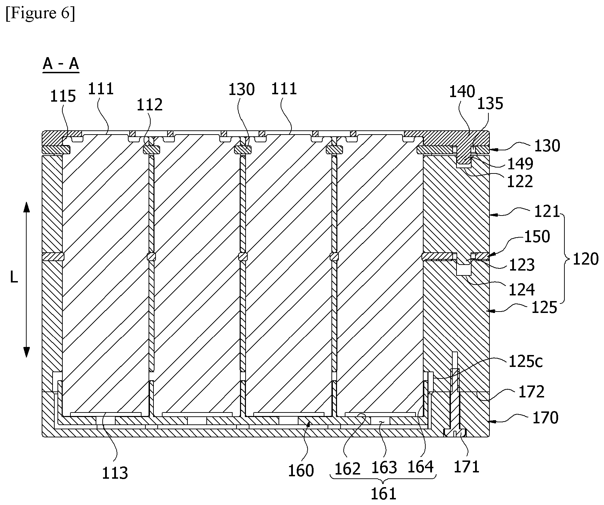

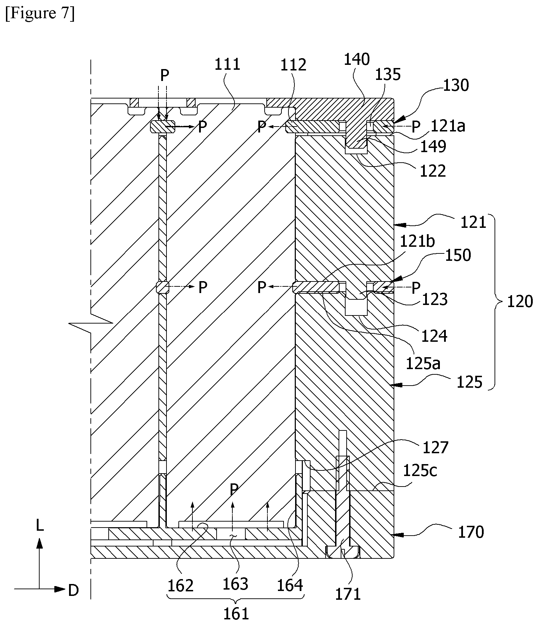

Figure 4 is a perspective diagram of a battery cell assembly according to one example of the present invention, Figure 5 is an exploded perspective diagram of a battery cell assembly according to one example of the present invention, Figure 6 is a cross-sectional diagram of A-A of Figure 4, and Figure 7 is a partially enlarged diagram of Figure 6, which is a diagram for explaining a force that a first soft portion to a third soft portion pressurize a plurality of battery cells in longitudinal and radial directions.

A battery cell assembly (100) according to one example of the present invention can be used as an energy source which is mountable on a lightweight transportation means (30) of Figure 1.

The battery cell assembly (100) may comprise a plurality of battery cells (110), a frame (120) on which the plurality of battery cells (110) is mounted, an upper cover (140) coupled with an upper surface (121a) of the frame (120) to cover the upper portions of the plurality of battery cells (110), and a lower cover (170) coupled with a lower surface (125b) of the frame (120) in a state where the lower portions of the plurality of battery cells (110) are partially inserted therein. Also, in the battery cell assembly (100), a first soft portion (130) maybe interposed between the frame (120) and the upper cover (140).

The battery cell (110) may be a cylindrical battery cell or a rectangular battery cell. The structure and constitutions of the battery cell are known technologies, so that the specific description of the structure and constitutions of the battery cell (110) will be omitted. In addition, for the convenience of explanation, this document will describe an assembly for assembling a plurality of cylindrical battery cells into one module.

The battery cell (110) has a positive terminal (111), a negative terminal (113), a negative connection portion (115), and a beading groove (112). The beading groove (112) is a portion recessed along the radial direction from the outer surface of the battery cell (110).

The negative connection portion (115) is arranged around the positive terminal (111), which is a portion electrically connected to the negative terminal (113) of the battery cell (110). The negative terminal (113) is located on the opposite side of the positive terminal (111).

Referring to Figure 5, the frame (120) comprises a first body (121) and a second body (125) in which the plurality of cell spaces (126) is opened in both directions along the longitudinal direction (L) of the battery cell (110). The first body (121) and the second body (125) may be arranged so that they enable to be fitted and coupled.

The cell space (126) is a space in which the battery cell (110) is inserted. The cell space (126) is opened in both directions along the longitudinal direction (L) of the battery cell (110). The frame (120) has a length shorter than the length of the battery cell (110). The plurality of battery cells (110) may be inserted into each cell space (126) such that the upper portions and the lower portions of the battery cell (110) are exposed to the outside of the frame (120).

In the battery cell assembly (100), the upper portions of the plurality of battery cells (110) may be integrally fixed to the upper surface (121a) of the frame (120) through the first soft portion (130). The upper portion of the battery cell (110) includes a positive terminal (111), a negative connection portion (115), and a beading groove (112), which is a portion exposed to the upper surface (121a) of the frame (120).

The first soft portion (130) may have a plurality of first soft holes (131) through which the upper portions of the plurality of battery cells (110) are each fitted and passed. The first soft portion (130) may be arranged such that the periphery of the first soft hole (131) is contactable with the upper surface (121a) of the frame (120).

The plurality of first soft holes (131) has an arrangement pattern of the plurality of battery cells (110). The plurality of first soft holes (131) are openings through which the battery cells (110) pass. The first soft hole (131) may be arranged to have the same diameter as the diameter of the beading groove (112) of the battery cell (110) or a diameter within a range that is closely contactable with the beading groove (112) upon compression.

The first soft portion (130) may have one or more first fixing holes (133) around the first soft hole (131). The first fixing holes (133) are arranged around the first soft hole (131).

The first fixing holes (133) are arranged to pass through the first fixing protrusions (127) of the upper surface (121a) of the frame (120), respectively. The first fixing hole (133) has a diameter larger than the diameter of the first fixing protrusion (127).

The first soft portion (130) may be seated on the upper surface (121a) of the frame (120) so that each of the plurality of first fixing holes (133) passes through each of the plurality of first fixing protrusions (127) of the first body (121), whereby the plurality of first soft holes (131) enables to be fitted and coupled into the beading grooves (112) of the plurality of battery cells (110).

The first soft portion (130) may be arranged with the plurality of first soft holes (131), the plurality of first fixing holes (133), and the plurality of first mounting holes (135) on the same plane.

The first soft portion (130) may be seated on the upper surface (121a) of the first body (121), and may be fitted and coupled into the beading grooves (112) of the battery cells (110), by passing through the upper portions of the plurality of battery cells (110) at once through the plurality of first soft holes (131).

The first soft portion (130) may have a compressible material, for example, a rubber material or a silicone material. The first soft portion (130) has predetermined elasticity due to the characteristics of the compressible material, so that the beading groove (112) of the battery cell (110) may be fitted and coupled into the first soft hole (131) in a manner that the battery cell (110) passes through the first soft hole (113).

The first soft portion (130) may be seated on the upper surface (121a) of the first body (121) at a preset normal position, as the plurality of first fixing holes (133) engages the plurality of first fixing protrusions (127) of the first body (121).

The first soft portion (130) is interposed between the upper surface (121a) of the frame (120) and the upper cover (140). The upper cover (140) may be compressed and fixed to the upper surface (121a) of the frame (120) through the first soft portion (130).

The upper cover (140) has one or more first cover protrusions (149) which are each fitted and coupled into one or more first grooves (122) arranged on the upper surface (121a) of the frame (120). The plurality of first cover protrusions (149) may be disposed to be spaced apart along the circumferential direction of the upper cover (140).

The upper cover (140) may be fitted and coupled to the upper surface (121a) of the first body (121) to cover the upper portions of the plurality of battery cells (110). The first cover protrusion (149) passes through each of the first mounting holes (135) of the first soft portion (130) to be inserted into each of the first grooves (122).

The first soft portion (130) may be integrally compressed and fixed between the upper cover (140) and the frame (120) to limit the longitudinally vertical movement (L) and the radial movement (D) of each of the plurality of battery cells (110).

In the first soft portion (130), the peripheries of the plurality of first soft holes (131) may be in close contact with the upper surface (121a) of the first body (121) and the upper cover (140). In the first soft portion (130), the plurality of soft holes (131) may be in close contact with the beading groove (112) of each battery cell (110) in the radial direction (D) of the battery cell (110).

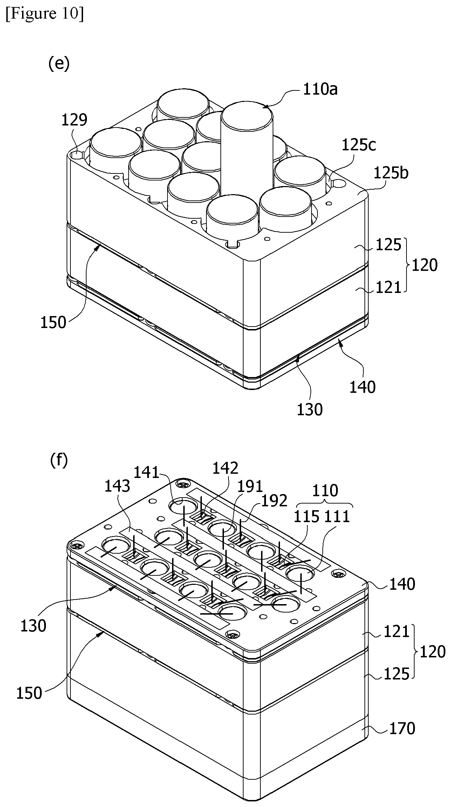

The first soft portion (130) has a structure of being fitted and coupled into the beading grooves (112) of the plurality of battery cells (110) in a compression manner, which may limit movement of the battery cell (110) in the longitudinal direction (L) through the beading grooves (112), and may prevent the surrounding battery cell (110) from being separated together when the issued battery cell (110a, see Figure 10(e)) is separated from the frame (120).

The radial direction (D) is a direction perpendicular to the longitudinal direction (L) of the battery cell (110). The radial direction (D) is a direction perpendicular to the outer surface of the battery cell (110).

Also, in the battery cell assembly (100), the lower portions of the plurality of battery cells (110) may be integrally compressed and fixed to the lower cover (170) through the second soft portion (160). The lower portion of the battery cell (110) is arranged with a negative terminal (113), which is a portion exposed to the lower surface (125b) of the second body (125).

The second soft portion (160) may be interposed between the frame (120) and the lower cover (170). The second soft portion (160) may have a compressible material, for example, a rubber material or a silicone material.

The second soft portion (160) is arranged to cover the lower portions of the plurality of battery cells (110) exposed to the lower portion of the frame (120). For example, the second soft portion (160) may be arranged as a holder type in which the lower portions of the plurality of battery cells (110) are inserted and fixed at a predetermined length.

The second soft portion (160) may have a plurality of soft grooves (161) so that the lower portions of the plurality of battery cells (110) is each inserted thereto. The soft grooves (161) are arranged so that the lower portions of the battery cells (110) are insertable in a predetermined length.

The second soft portion (160) may be inserted and fixed into the lower portions of the plurality of battery cells (110) through the plurality of soft grooves (161).

In the second soft portion (160), the plurality of soft grooves (161) may be integrally formed. The second soft portion (160) may connect the lower portions of the plurality of battery cells (110) as one through the plurality of soft grooves (161).

The bottom surface (162) of the second soft groove (161) supports the plurality of battery cells (110) and is arranged to be surface-contactable with the bottom surface of the lower cover groove (173). The second soft portion (160) may have a second soft hole (163) passing through the bottom surface (162) of the second soft groove (161).

The second soft hole (163) is an opening passing through the bottom surface (162) of the second soft groove (161). The second soft hole (163) has a diameter smaller than the diameter of the battery cell (110). The second soft hole (163) acts as an air passage when the bottom surface (162) of the second soft groove (161) of the second soft portion (160) is compressed to the lower portions of the plurality of battery cells (110).

The air between the bottom surface (162) of the second soft groove (161) and the lower portions of the plurality of battery cells (110) flows to the outside of the second soft portion (160) through the second soft hole (163). Accordingly, the second soft portion (160) may be closely attached and fixed to the lower portions of the plurality of battery cells (110).

The second soft portion (160) may have a soft rib (164) arranged to surround the battery cell (110) by extending from the bottom surface (162) of the second soft groove (161) to a predetermined length.

The soft rib (164) is in a form that surrounds each outer surface of the plurality of battery cells (110), which protrudes from the bottom surface (162) of the second soft groove (161) to a predetermined length. The length of the soft rib (164) may be arranged to be equal to or shorter than the length of the battery cell (110) exposed to the lower portion of the frame (120).

The second soft portion (160) may be compressed and fixed to the lower portions of the plurality of battery cells (110) and the bottom surface of the lower cover groove (173) upon coupling of the lower cover (170) and the frame (120). The lower cover groove (173) may be arranged to be contactable with the bottom surface (161) of the second soft groove (161) of the second soft portion (160) and to have a free space with the outer surface of the soft rib (164).

The lower cover (170) may have a lower cover groove (173) recessed from the lower cover (170) coupling surface in contact with the lower surface (125b) of the frame (120), and may be coupled to the lower surface (125b) of the frame (120) so that the lower cover groove (173) contacts the second soft portion (160), thereby being compressed and fixed to the plurality of battery cells (110) through the second soft portion (160).

The lower cover (170) may be coupled to the frame (120) in a state where the second soft portion (160) is inserted into the lower portions of the plurality of battery cells (110), thereby limiting the vertical movement of each of the plurality of battery cells (110).

Meanwhile, the frame (120) comprises a first body (121) and a second body (125). The first body (121) and the second body (125) are compressed and fixed through the third soft portion (150).

The first body (121) and the second body (125) are fitted and coupled. The first body (121) and the second body (125) may be fitted and coupled at a normal position through a plurality of second fixing grooves (not shown) and a plurality of second fixing protrusions (128).

The second fixing groove (not shown) is a groove recessed from the first body coupling surface (121b) and arranged so that the second fixing protrusion (128) is insertable. The first body coupling surface (121b) is a portion in contact with the second body coupling surface (125a) of the second body (125). The first body coupling surface (121b) is the lower surface of the first body (121).

The second fixing protrusion (128) protrudes from the second body coupling surface (125a) and is arranged to be insertable into the second fixing groove (not shown). The second fixing protrusion (128) is arranged around the cell space (126).

In addition, the second body (125) is arranged with a plurality of second grooves (124) on the second body coupling surface (125a). The plurality of second grooves (124) are portions where the plurality of first protrusions (123) of the first body is each fitted and coupled. The second groove (124) of the second body (125) is coaxially positioned with the first groove (122) and the first protrusion (123) of the first body.

The first body (121) and the second body (125) may be compressed and fixed through the third soft portion (150). The third soft portion (150) may compress and fix the middles of the plurality of battery cells (110) to the frame (120). The third soft portion (150) may have a plurality of third soft holes (151) through which the plurality of battery cells (110) may each be fitted and passed.

The third soft portion (150) has a plurality of third soft holes (151), a plurality of third fixing holes (153), and a plurality of third mounting holes (155). The third soft portion (150) may have a compressible material, for example, a rubber material or a silicone material.

The plurality of third soft holes (151) are arranged according to the arrangement pattern of the battery cells (110). The third soft portion (150) may be arranged so that the peripheries of the third soft holes (151) are contactable with the first body coupling surface (121b) of the first body (121) and the second body coupling surface (125a) of the second body (125).

The third soft portion (150) has one or more third fixing holes (153) arranged to pass through one or more second fixing protrusions (128), respectively, protruding from the upper surface of the second body (125).

The third soft portion (150) may be seated on the upper surface (125a) of the second body (125) so that the third soft holes (151) are individually exposed to the cell spaces (126) of the frame (120) through the third fixing holes (153).

The third soft portion (150) may limit the movement of each of the plurality of battery cells (110) in the radial direction, as the periphery of the third soft hole (151) is compressed to the first body (121) and the second body (125), and the third soft hole (151) is compressed to the outer surface of the battery cell (110) in the cell space (126) of the frame (120).

In the battery cell assembly (100), the plurality of battery cells (110) may be compressed and fixed to the middle of the frame (120) through the third soft portion (150).

Step portions (125c) recessed along the circumferential direction may be arranged on the lower surface (125b) of the second body (125).

The step portions (125c) are arranged so that there is a free space between the inner surface of the frame (120) and the second soft portion (160) in a state where the second soft portion (160) is inserted into the lower portions of the plurality of battery cells (110). The step portion (125c) is a gap space provided so that the second soft portion (160) is not in contact with the inner surface of the frame (120).

The second soft portion (160) may be inserted and fixed into the lower portions of the plurality of battery cells (110) without being in close contact with the inner surface of the frame (120) through the step portion (125c).

If the lower cover (170) is separated from the frame (120) upon disassembly of the battery cell assembly (100), the second soft portion (160) is exposed to the outside of the frame (120) without being in close contact with the inner surface of the frame (120) through the step portion (125c), so that it may be easily separated from the lower portions of the plurality of battery cells (110).

The lower cover (170) may be fitted and coupled to the lower surface (125a) of the second body (125) to cover the lower portions of the plurality of battery cells (110) on which the second soft portion (160) is mounted. The lower cover (170) is coupled to the lower surface (125b) of the second body (125) to be in contact with the bottom surface (162) of the second soft groove (161) of the second soft portion (160).

The lower cover (170) has a lower cover coupling surface (172) in contact with the lower surface (125b) of the frame (120) and a lower cover groove (173) recessed from the lower cover coupling surface (172).

The lower cover (170) may be coupled to the lower surface (125b) of the frame (120) so that the lower cover groove (173) covers the second soft portion (160), and may be compressed and fixed to the lower portions of the plurality of battery cells (110) through the second soft portion (160).

The lower cover (170) has a plurality of second cover protrusions (174) protruding from the lower cover coupling surface (172). The lower cover (170) may be fitted and coupled into the third groove (129, see Figure 10(e)) of the second body (125) at a normal position through the plurality of second cover protrusions (174). In addition, the lower cover (170) may be coupled to the second body (125) using screws (171).

The battery cell assembly (100) may couple the plurality of battery cells (110) at normal positions of the frame (120) in a simple assembly manner that the respective components are fitted and coupled at normal positions, whereby it is possible to improve the manufacturing efficiency of the battery cell assembly (100).

Also, the battery cell assembly (100) has a structure in which each component is detachably assembled, wherein disassembly of the battery cell assembly (100) is simple, whereby it is easy to replace some battery cells (110a).

In addition, the battery cell assembly (100) may replace some battery cells (110a) with new battery cells (110), whereby it is possible to extend the service life.

In this document, the battery cell assembly (100) is described based on an example in which the plurality of battery cells (110) is connected between terminals using a wire bonding method, but it is not necessarily limited thereto, where the method of connecting the terminals of the battery cells can be changed to various examples.

Hereinafter, the structure of the upper cover (140) will be described when the battery cell assembly (100) adopts the wire bonding method as the terminal connection method of the plurality of battery cells (110).

The upper cover (140) has a plurality of first cover holes (141), a plurality of second cover holes (142), and an electrode terminal block (143).

The first cover hole (141) is an opening arranged so that the positive terminal (111) of the battery cell (110) is exposed. The second cover hole (142) is an opening arranged so that the negative connection portion (115) electrically connected to the negative terminal (113) of the battery cell (110) is exposed. The negative connection portion (115) is arranged to surround the positive terminal (111) at the upper portion of the battery cell (110).

The negative terminal (113) is arranged at the lower portion of the battery cell (110). The second cover hole (142) is arranged between two first cover holes (141) adjacent to each other. The second cover hole (142) is an opening having a different shape from the first cover hole (141).

The positive terminal (111) and the negative connection portion (115) are electrically connected to the electrode terminal block (143) by a wire (191, 192) bonding method. The wires (191, 192) may be made of a material having electrical conductivity, such as copper or aluminum.

Reference Numeral 191 is a positive wire (191) connecting the positive terminal (111) and the electrode terminal block (143). Reference Numeral 192 is a negative wire (192) connecting the negative connection portion (115) and the electrode terminal block (143).

In the battery cell assembly (100), the battery cells (110a) that need to be replaced among the plurality of battery cells (110) can be individually separated from the frame (120) through the following process. The battery cells (110a) that need to be replaced (or, also called issued battery cells) are battery cells (110) having a problem such as damage or a short circuit.

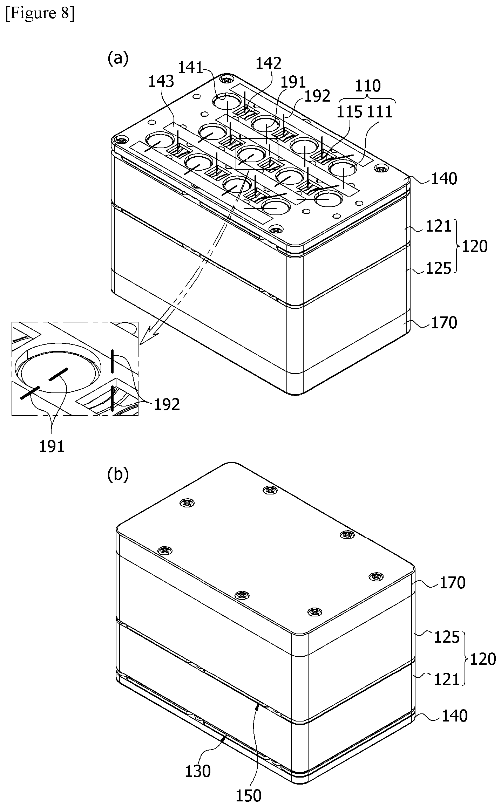

The process of replacing the issued battery cell (100a) in the battery cell assembly (100) will be described with reference to Figures 8 to 10. Figures 8 to 10 are diagrams for explaining a process of separating an issued battery cell in a battery cell assembly according to one example of the present invention and replacing it with a new battery cell.

Referring to Figure 8(a), the wire (191, 192) bonding between the terminal of the issued battery cell (110a) and the electrode terminal block (143) is cut.

Referring to Figure 8(b), the lower cover (170) is separated from the frame (120), and then the second soft portion (160) is separated from the lower portions of the plurality of battery cells (110).

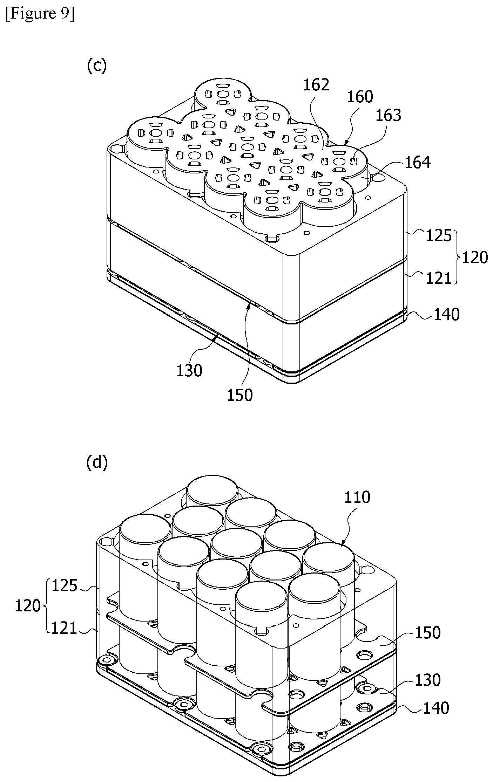

Referring to Figure 9(c), if the lower cover (170) is separated from the frame (120), the second soft portion (160) is exposed to the outside. In this state, the second soft portion (160) is peeled off from the lower portions of the plurality of battery cells (110).

The second soft portion (160) is made of a rubber material, and thus, if the pressing force of the lower cover (170) is released, the compressing force (P, refer to Figure 7) on the plurality of battery cells (110) is also released, so that it can be easily separated from the lower portions of the plurality of battery cells (110).

Next, referring to Figures 9(d) and 10(e), the issued battery cell (110a) is separated from the cell space (126) of the frame (120), and a new battery cell (110) is inserted into the cell space (126) of the frame (120).

The issued battery cell (110a) can be separated from the frame (120) by pulling it in the longitudinal direction (L) of the battery cell (110) with a force greater than the compressing force (P) of the first soft portion (130) and the third soft portion (150) on the issued battery cell (110a).

Next, the second soft portion (160) is mounted on the lower portions of the plurality of battery cells (110) including the new battery cell (110), and then the lower cover (170) is coupled to the lower surface (125b) of the frame (120). Finally, referring to Figure 10(f), the terminal of the new battery cell (110) and the electrode terminal block (143) are bonded with wires (191, 192).

The battery cell assembly (100) has a structure that the plurality of battery cells (110) is fixed to the frame (120) in a compression manner, and thus, if the compressing force (P) of the first soft portion (130) and the second soft portion (160) on the battery cells (110) is released, the battery cells (110) can be individually separated from the frame (120).

Through coupling of the upper cover (140) and the frame (120), the first soft portion (130) can be fixed therebetween, and the upper portions of the plurality of battery cells (110) can be fixed integrally through the fixed first soft portion (130).

Through coupling of the lower cover (170) and the frame (120), the second soft portion (160) can be fixed therebetween, and the lower portions of the plurality of battery cells (110) can be fixed integrally through the fixed second soft portion (160).

The battery cell assembly (100) can be disassembled in the reverse order of the manufacturing or assembly order of the battery cell assembly (100). Particularly, if the coupling of the lower cover (170) and the frame (120) is released, and thus the lower cover (170) is removed, the second soft portion (160) and the lower portions of the battery cells (110) coupled thereto can be exposed to the outside. The lower portions of the battery cells (110) have a certain gap through the second soft portion. If only the second soft portion (160) is removed, the lower portions of the battery cells (110) can be exposed to the outside in a state where they have a certain gap.

Therefore, the lower portion of the issued battery cell (110a) can be held and separated from the frame (120). At this time, the first soft portion (130) and/or the third soft portion (150) are in a state of being fixed to the frame (120), so that the issued battery cell (110) can be easily separated from the first soft portion (130) and/or the third soft portion (150) without being affected by other battery cells (110).

Therefore, it is very easy to individually separate each of the plurality of battery cells (110) from the battery cell assembly (100), which enables to easily replace each of the plurality of battery cells (110).

The preferred examples of the present invention as described above have been disclo sed for illustrative purposes, and those skilled in the art having ordinary knowledge of the pre sent invention will be able to make various modifications, changes, and additions within the s pirit and scope of the present invention, and such modifications, changes, and additions shoul d be regarded as falling within the scope of the following claims.

## Claims

1. A battery cell assembly comprising:
a plurality of battery cells;
a frame on which the plurality of battery cells is mounted;
an upper cover coupled with the upper surface of the frame to cover the upper portions of the plurality of battery cells:
a first soft portion interposed between the frame and the upper cover and having a plurality of first soft holes through which the upper portions of the plurality of battery cells are each fitted and passed; and
a lower cover coupled with the lower surface of the frame in a state where the lower portions of the plurality of battery cells are partially inserted.

2. The battery cell assembly according to claim 1, **characterized in that**
the first soft portion is integrally compressed and fixed between the upper cover and the frame to limit vertical movement and radial movement of each of the plurality of battery cells.

3. The battery cell assembly according to claim 2, wherein
the first soft portion is arranged such that the periphery of the first soft hole is contactable with the upper surface of the frame.

4. The battery cell assembly according to claim 1, wherein
the first soft portion has one or more first fixing holes arranged to pass through one or more first fixing protrusions, respectively, protruding from the upper surface of the frame around cell spaces of the frame.

5. The battery cell assembly according to claim 1, **characterized in that**
the upper cover has one or more first cover protrusions which are each fitted and coupled to one or more first grooves arranged on the upper surface of the frame, and is compressed and fixed to the upper surface of the frame through the first soft portion.

6. The battery cell assembly according to claim 1, wherein
in the battery cell assembly, a second soft portion is interposed between the frame and the lower cover, and
the second soft portion has a plurality of soft grooves into which the lower portions of the plurality of battery cells are each inserted.

7. The battery cell assembly according to claim 6, **characterized in that**
in the second soft portion, the plurality of soft grooves is integrally formed.

8. The battery cell assembly according to claim 7, wherein
the second soft portion connects the lower portions of the plurality of battery cells as one through the plurality of soft grooves.

9. The battery cell assembly according to claim 6, wherein
the second soft portion has a second soft hole passing through the bottom surface of the second soft groove.

10. The battery cell assembly according to claim 9, wherein
the second soft portion has a soft rib arranged to surround the battery cell by extending from the bottom surface of the second soft groove to a predetermined length.

11. The battery cell assembly according to claim 6, wherein
the second soft portion is arranged to cover the lower portions of the plurality of battery cells exposed to the lower portion of the frame.

12. The battery cell assembly according to claim 11, wherein
the frame is arranged with step portions recessed along the circumferential direction on the lower surface of the frame so that there is a free space between the inner surface of the frame and the second soft portion in a state where the second soft portion is inserted into the lower portions of the plurality of battery cells.

13. The battery cell assembly according to claim 6, **characterized in that**
the lower cover is coupled to the frame in a state where the second soft portion is inserted into the lower portions of the plurality of battery cells to limit vertical movement of each of the plurality of battery cells.

14. The battery cell assembly according to claim 13, **characterized in that**
the lower cover has a lower cover groove recessed from a lower cover coupling surface in contact with the lower surface of the frame, and is coupled to the lower surface of the frame so that the lower cover groove contacts the second soft portion, thereby being compressed and fixed to the plurality of battery cells through the second soft portion.

15. The battery cell assembly according to claim 1, wherein
the frame comprises a first body and a second body in which a plurality of cell spaces into which the battery cells are insertable are opened in both directions along the longitudinal direction of the battery cells, and the first body and the second body are arranged so that they enable to be fitted and coupled.

16. The battery cell assembly according to claim 15, wherein
a third soft portion is interposed between the first body and the second body.

17. The battery cell assembly according to claim 16, wherein
the third soft portion has a plurality of third soft holes through which each of the plurality of battery cells is fitted and passed.

18. The battery cell assembly according to claim 17, **characterized in that**
the third soft portion limits movement of each of the plurality of battery cells in the radial direction, as the periphery of the third soft hole is compressed to the first body and the second body and the third soft hole is compressed to the outer surface of the battery cell in the cell space of the frame.

19. The battery cell assembly according to claim 17, **characterized in that**
the third soft portion has one or more third fixing holes arranged to pass through one or more second fixing protrusions, respectively, protruding from the upper surface of the second body, and is seated on the upper surface of the second body so that the third soft holes are individually exposed to the cell space of the frame through the third fixing holes.

20. The battery cell assembly according to claim 17, wherein
one or more third grooves are arranged on the lower surface of the second body, and
the second body is fitted and coupled to the second cover protrusion of the lower cov er through the third groove.
